# EUROPEAN PATENT APPLICATION

(11) **EP 1 648 055 A1**
(43) Date of publication of application: **19.04.2006**
(21) Application number: 04258175.1
(22) Date of filing: 30.12.2004
(51) Int. Cl.: H01S 3/067

(54) **Optical fiber and hybrid optical fiber amplifier using the same**

(30) Priority: 13.10.2004 KR 2004081608
(71) Applicant: ELECTRONICS AND TELECOMMUNICATIONS RESEARCH INSTITUTE, Daejeon-shi (KR)
(72) Inventor: Seo, Hong Seok, Daejeon-shi 302-726 (KR); Chung, Woon Jin, Seoul 135-190 (KR); Ahn, Joon Tae, Daejeon-shi 301-780 (KR)
(74) Representative: Powell, Timothy John

(57) **Abstract**

Provided are an optical fiber and an optical fiber amplifier using the same comprising: a cladding doped with a first element, the first element being a rare-earth element; and a core doped with a second element to induce a nonlinear Raman phenomenon, wherein a pump light propagating through the core is amplified into a first band by the first element of the cladding and Raman-amplified into a second band by the second element.
Also disclosed is an optical fiber comprising:
at least one optical fiber doped with a first element, wherein the first element is rare-earth element; and
at least one optical fiber doped with a second element to induce nonlinear Raman amplification,
wherein the optical fiber doped with the first element and the optical fiber doped with the second element are connected in series, and
wherein a pump light having a predetermined wavelength propagating through the core is amplified into a first band by the first element, and Raman-amplified into a second band by the second element.

## Description

### CROSS-REFERENCE TO RELATED APPLICATION

This application claims priority to and the benefit of Korean Patent Application No. 2004-81608, filed on October 13, 2004, the disclosure of which is incorporated herein by reference in its entirety.

### BACKGROUND

### 1. Field of the Invention

The present invention relates to an optical fiber and an optical fiber amplifier using the same and, more specifically, to an optical fiber in which an optical signal is amplified with a rare-earth element by doping the rare-earth element into a cladding, and optical amplification occurs at the same time through the Raman effect using non-linearity of composition material in an optical fiber core.

### 2. Discussion of Related Art

In general, as an optical fiber amplifier, an Er-doped optical fiber amplifier, a fiber Raman amplifier using the Raman phenomenon, and a semiconductor optical amplifier have been developed. Among these, with the progress of the high-power semiconductor laser diode, the fiber Raman amplifier and the Er-doped optical fiber amplifier have been widely researched as a critical amplifier in a wavelength division multiplexing optical communication system.

The Er-doped optical fiber amplifier is largely used as a C-band optical amplifier, and may also be used as an L-band optical amplifier by changing a structure. However, for an amplification method used in both the C-band and the L-band, when the C-band amplifier and the L-band amplifier are connected in parallel, there are problems in that the number of optical devices is large and the overall structure is rather complicated.

The fiber Raman amplifier has a gain range changed according to a pump wavelength, so that it is possible to amplify signals in a band where the Er-doped optical amplifier cannot amplify the signals. In addition, it is possible to expand a gain bandwidth more than 100 nm using multiple wavelength pumps. For a distributed type Raman amplifier that uses a transmission medium itself as an amplification medium, a signal to noise ratio is significantly improved. However, the fiber Raman amplifier has problems in that an elongated nonlinear optical fiber medium is required for amplification and a number of high-power semiconductor lasers for a C-band optical amplifier and a number of high-power semiconductor lasers for an L-band optical amplifier, operating at different frequencies, are needed to obtain a desired optical gain.

### SUMMARY OF THE INVENTION

The present invention is directed to an optical fiber in which optical signal amplification using a rare-earth element and optical signal amplification using the Raman effect may be provided at the same time.

The present invention is also directed to an optical fiber in which a gain characteristic according to a concentration in a cladding of the rare-earth element (e.g., erbium) is analyzed and an optical pumping power and a length of an optical fiber are adjusted to provide optical gain flatness at an amplification band using the rare-earth element and an amplification band using the Raman effect.

The present invention is also directed to an optical fiber having a simple structure and an optical fiber amplifier using the same.

One aspect of the present invention is to provide an optical fiber comprising: a cladding doped with a first element, the first element being a rare-earth element; and a core doped with a second element to induce a nonlinear Raman phenomenon, wherein a pump light propagating through the core is amplified into a first band by the first element of the cladding and Raman-amplified into a second band by the second element.

The first band and the second band may be the same or different from each other, and the first element may be doped into at least a region adjacent to the core.

Another aspect of the present invention is to provide an optical fiber comprising: at least one optical fiber doped with a first element, the first element being a rare-earth element, and at least one optical fiber doped with a second element to induce the nonlinear Raman amplification, wherein the optical fiber doped with the first element and the optical fiber doped with the second element are connected in series, and wherein a pump light having a predetermined wavelength propagating through the core is amplified into a first band by the first element, and Raman-amplified into a second band by the second element. The optical fiber doped with the first element may be an Er-doped silica optical fiber, the optical fiber doped with the second element may be a Ge-doped silica optical fiber, and the Ge is doped at a concentration of 10 to 30 mol %, and the pump light may be amplified into a C-band by Er, and Raman-amplified into an L band by Ge.

Yet another aspect of the present invention is to provide a hybrid optical fiber amplifier comprising: the afore-mentioned optical fiber for receiving an optical signal from an input stage, amplifying the optical signal, and transferring the optical signal to an output stage; at least one light source for outputting a pump light to the optical fiber; and at least one coupler for coupling the optical signal and the pump light output from the light source.

One light source and one coupler may be provided to the input stage and the output stage, respectively.

The optical fiber amplifier may further include: a first isolator arranged at a front part of the coupler of the input stage for passing an optical signal input from the input stage while blocking light input from the opposite direction; and a second isolator arranged at a back part of the coupler of the output stage for passing an output optical signal while blocking light input from the opposite direction.

### BRIEF DESCRIPTION OF THE DRAWINGS

The above and other features of the present invention will be described in reference to certain exemplary embodiments thereof with reference to the attached drawings in which:

FIG. 1 is a schematic diagram showing an optical fiber according to a preferred embodiment of the present invention;

FIGS. 2 and 3 are exemplary cross sectional views of the optical fiber of FIG. 1;

FIG. 4 is a schematic digram showing an optical fiber amplifier according to a preferred embodiment of the present invention;

FIG. 5 is a diagram showing a calculation result of a gain change over a length of an optical fiber from a simulation of an optical fiber amplifier according to a preferred embodiment of the present invention;

FIG. 6 is a graph showing a gain change over a pumping power of an optical fiber according to a preferred embodiment of the present invention;

FIGS. 7A and 7B are graphs showing a gain level and a noise feature for an optimal length of the optical fiber and an optimal pump energy, over an Er concentration in a cladding of the optical fiber amplifier of FIG. 5;

FIGS. 8A to 8C are schematic diagrams showing an optical fiber in which an Er-doped optical fiber and a high germanium doped optical fiber are connected in series so that C-band amplification and L-band amplification may be performed using a pump source having one wavelength; and

FIG. 9 is a graph sowing a gain and noise index (noise) obtained from each simulation of three optical fibers of FIGS. 8A to 8C.

### DETAILED DESCRIPTION OF PREFERRED EMBODIMENTS

A term "optical fiber" used in the present invention collectively refers to a fiber that serves to transmit light in a constant direction irrespective of a size and a medium, etc., without specific limitations, so that it should be construed to include those such as waveguides.

An optical fiber according to a preferred embodiment of the present invention will now be described with reference to the accompanying drawings. However, a variety of modification may be made so that these embodiments should not be construed as limiting to the scope of the present invention. The embodiments of the present invention are provided for a through and complete understanding to those skilled in the art.

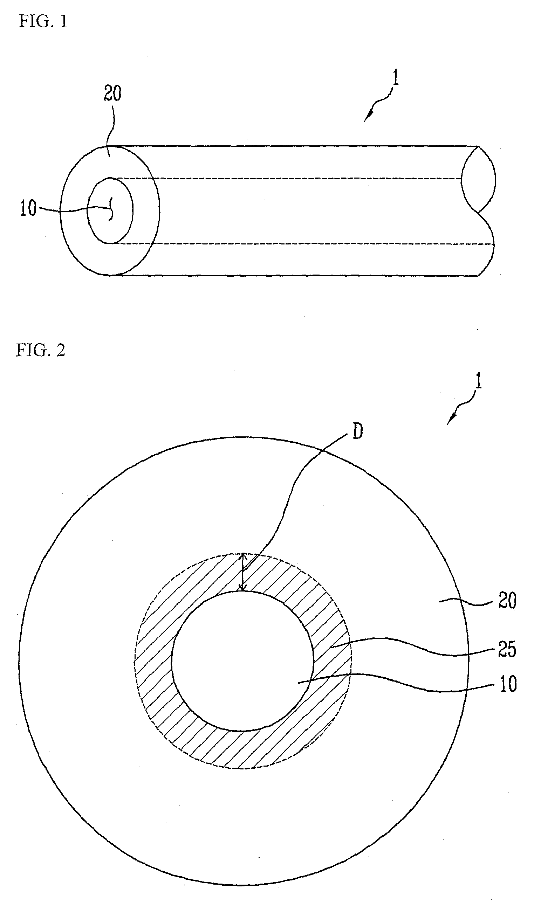

FIG. 1 is a schematic diagram showing an optical fiber according to a preferred embodiment of the present invention.

Referring to FIG. 1, an optical fiber 1 has a cladding 20, and a core 10 in which a refractive index is larger than that of the cladding 20. The cladding 20 is doped with a first element, or a rare-earth element, and the core 10 is doped with a second element to induce the nonlinear Raman phenomenon. The optical fiber may be made of silica, tellurite, fluoride, sulfide-based, or selenide-based. The first element (rare-earth element) may be any one of erbium (Er), ytterbium (Yb), praseodymium (Pr), neodynium (Nd), holmium (Ho), thulium (TM), and dysprosium (Dy), and the second element used for Raman amplification is any one of silicon (Si), germanium (Ge), phosphorus (P), sulfur (S), tellurium (Te), and selenium (Se), each constituting a glass. In addition, more than one type of elements may be doped as the first and second elements, respectively.

A pump light propagating through the core 10 is amplified into a first band by the first element of the cladding 20, and Raman-amplified into a second band by the second element. The first and second bands may be the same or different from each other. While the pump light propagates along the core 20, erbium doped into the cladding 20 is excited due to an evanescent wave of the light, and the pump light propagating into the core 10 is Raman-scattered due to germanium in the core 10, and input channels passing the wavelength band are Raman-amplified.

For example, when the optical fiber is made of silica, it pumps into a wavelength band of 1480 to 1500 nm, and Er may be used as the first element and Ge may be used as the second element. The optical fiber is made of silica, the core is dope with Ge, and the cladding is doped with Er. The C-band (1530 to 1570 nm) amplification may be made using Er, and the L-band (1570 to 1610 nm) amplification may be made by the Raman amplification using Ge. Therefore, the optical gain in which a band of 1530 to 1610 nm is flattened may be obtained. Here, Er is doped into the cladding 20 at a concentration of 10¹⁵ cm⁻³ ~ 10¹⁷ cm⁻³, and Ge is doped into the core 10 at the concentration of 10 ~30 mol%.

A typical Er-doped optical fiber amplifier requires an optical fiber having a length of about 10m to amplify a C-band optical signal up to 30 dB or more. However, for the Raman amplifier, the optical fiber having a length of several kilometers is required to amplify the optical signal under the same condition.

Therefore, as described in the present invention, when the optical fiber uses Er for the C-band amplification and Raman optical gain for the L-band amplification, at least several kilometers of optical fiber is needed to achieve the Raman optical amplification in the L-band. Therefore, since the concentration of Er in the silica optical fiber should make the C-band amplification in the same length of several kilometers, Er is preferably doped at a concentration of about one-several hundredths of the typical Er-doped optical fiber (i.e., 10¹⁵~ 10¹⁷ cm⁻³). In addition, the concentration of Ge is between 10 mol % and 30 mol %, the difference of the refractive indexes between the core and cladding becomes 0.015 to 0.03, so that sufficient Raman amplification may be obtained in 1 to 10 km. In case that a high-power laser diode operating at a wavelength of 1.495 µm pumps the optical fiber, the optical signal in the C-band is amplified due to Er in the cladding, and the remaining pump light not absorbed by Er is used in the nonlinear Raman amplification so that the L-band optical signal is amplified in the band of 1.59 µm corresponding to the Raman shift of the pump light.

Further, in the case that a gain obtained throughout the C-band and L-band is changed according to the concentration of Er in the cladding, the concentration of Ge in the core, the optical fiber structure, the length of the optical fiber, and the pumping power, the gain may be flattened within 5dB by adjusting the length of the optical fiber and the pumping power. Therefore, the concentration of Er in the core of the optical fiber should have an optimal concentration to obtain a flat gain between the C-band and the L-band. When the concentration of Er is too large, all of the C-band optical signals are absorbed by the unexcited Er ions, and the L-band optical signals are not amplified since the power of the pump light is low. Preferably, the concentration of Er is doped in the range of 10¹⁵~10¹⁷ cm⁻³ in the cladding. When the concentration of Er is too small, the L-band optical signals are amplified larger than the C-band optical signals.

Further, when the optical fiber is made of tellurite, it may pump into a signal wavelength in a range of 1470 to 1500 nm, the L-band (1570 to 1610 nm) amplification may be made using tellurite, and the U-band (1610 to 1700 nm) amplification may be made using Ge through the nonlinear Raman amplification, respectively.

As another example, the C-band amplification may be made using both Er and Raman effect. In this case, the C-band optical signals may have a larger gain and a higher output. Here, a light pump wavelength for incurring the stimulated Raman scattering (SRS) in the C-band may be in the range of 1430 to 1450 nm. In this case, since there is Er absorption in the wavelength of this range, the amplification due to Er may also be made.

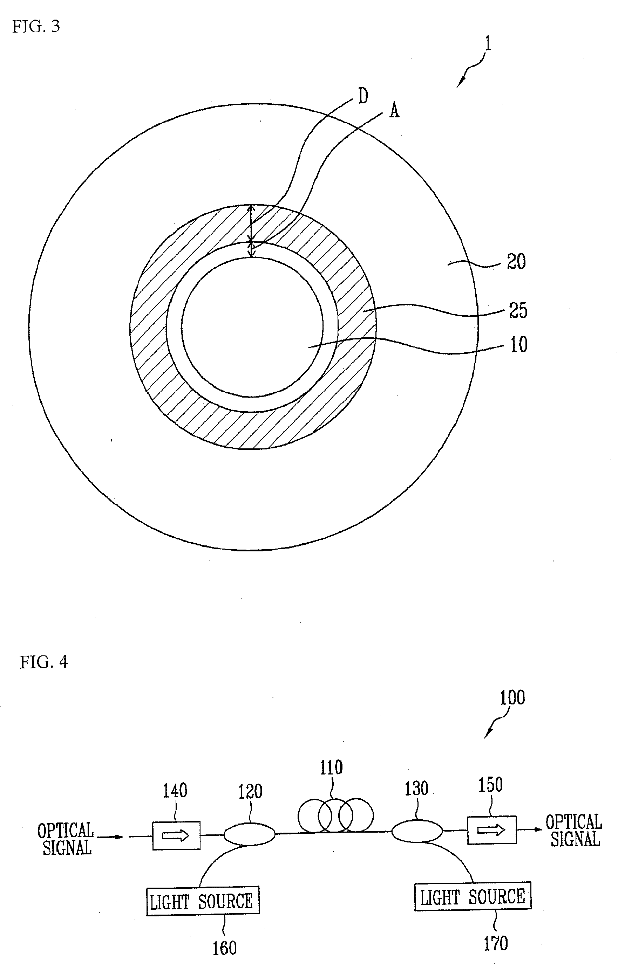

FIGS. 2 and 3 are exemplary cross sectional views of the optical fiber of FIG. 1.

Referring to FIG. 2, the optical fiber 1 has a core 10 and a cladding 20, and a doped region 25 doped with a first element which is a rare-earth element in the cladding. The pump light propagating the core 10 is Raman-scattered at 100 nm apart from the pump due to Ge in the core 10, and the input channels passing the wavelength band are Raman-amplified. The rare-earth-element, e.g, Er-doped region 25 may have a ring type in the cladding region 20 immediately adjacent to the core 10, as shown in FIG. 2.

Further, the characteristic of the optical amplification is very sensitive to the location of the Er-doped region 25. For example, when the Er-doped region 25 is at the center of the core, the optical loss in the core 10 is increased while fabricating the optical fiber, so that the characteristic of Raman amplification may be attenuated. In addition, in order to make the gain due to the rare-earth element identical to the optical gain due to the Raman effect, the concentration of the rare-earth element is preferably lowered corresponding to the length of the optical fiber required for the Raman amplification. However, when the rare-earth element is doped into the cladding region 20, an additional optical loss generated in doping is provided to the cladding region 20, so that the overall optical loss may be reduced. Therefore, the concentration of Er may be a bit larger than that for the case where Er is doped into the core. Thus, advantageously, the tolerance to the concentration may be improved more or less.

The doped region 25 of FIG. 2 is formed in a ring type immediately adjacent to the core 10, and the thickness D thereof is preferably 1 to 5 µm and the concentration of the rare-earth element doped into the cladding 20 is in the range of 10¹⁵ to 10¹⁷ cm⁻³. While the Er-doped region in the cladding 20 is shown to be a cladding region 20 adjacent to the core in FIG. 2, Er may be doped all over the cladding 20. The rare-earth doped region 25 in the cladding 20 and the doping concentration closely affect the optical amplification characteristic due to the rare-earth element and the optical amplification characteristic due to the Raman effect.

In addition, depending on how far the doped region 25 is located from the core (A of FIG. 3), the optical amplification characteristic is sensitively changed, and a background loss of the optical fiber is also changed. The doped region 25 and the core 10 in FIG. 3 are spaced apart from each other by a distance A. Further, the refractive index of the doped region 25 is adjusted to be equal to or within an error range of about 10⁻³ from that of the cladding 20.

FIG. 4 is a schematic digram showing an optical fiber amplifier according to a preferred embodiment of the present invention.

An optical fiber amplifier 100 includes first and second isolators 140 and 150, an optical fiber 110, first and second couplers 120 and 130, and first and second light sources 160 and 170.

The first isolator 140 passes an optical signal input to the optical fiber amplifier while blocking the light input from the opposite direction. The second isolator 150 passes light input through the second coupler 130 while blocking the optical signal input from the opposite direction. Here, the first and second isolators 140 and 150 may be omitted.

The optical fiber includes a core and a cladding, in which a first element is doped into the cladding to amplify light in the first band using the rare-earth element and a second element is doped into the core to amplify light in the second band using the nonlinear Raman optical amplification.

The first and second light sources 160 and 170 are laser diodes that pump light in a single wavelength having a range of, for example, 1480 to 1500 nm to output light to the optical fiber 110.

The first coupler 120 couples an optical signal passing through the first isolator 140 and light output from the first light source 160 to input the combined one to the optical fiber 110, and the second coupler 130 passes the optical signal and inputs light received from the second light source 170 into the optical fiber 110 in the opposite direction.

Further, although two light sources and two WDM couplers are used in the present embodiment, one light source and one WDM coupler arranged on each side of the optical fiber 110 may be used.

(Simulation)

Next, the result of the simulation of the optical fiber amplifier of FIG. 4 will be described. In the simulated structure, the optical fiber having a length of 5 km is pumped in both directions by a pump laser having a wavelength of 1.495 µm. The length of the used optical fiber is sufficiently long compared to that used in the C-band optical amplifier, but shorter than that of the distributed Er-doped optical fiber amplifier. Variables in the optical fiber used for simulation are fixed to the core diameter of 5.2 µm and a cut-off wavelength of 1.41 µm. In addition, there is a doped region into which Er is doped in the cladding region, in a ring type immediately adjacent to the core region. The thickness of the doped region is about 2.6 µm. These values closely affect the optical amplification characteristic due to Er and the optical amplification characteristic due to the Raman effect.

In addition, depending on how far the Er doped region is separated, the optical amplification characteristic is sensitively changed, and the background loss of the optical fiber is also changed. The difference of the refractive indexes between the core and the cladding is 0.015. Here, a Raman gain coefficient is determined by a concentration of Ge and an effective core cross sectional area. The concentration of Er in the cladding adjacent to the core of the optical fiber should have an optical concentration value to obtain the flat gain over the C-band and the L-band. When the concentration of Er is too large, all of the C-band optical signals are absorbed by the unexcited Er ions, and the L-band optical signal is not amplified since the power of the pump light is low. When the concentration of Er is too small, the L-band optical signal is amplified larger than the C-band optical signal.

For the background loss of the optical fiber used in the simulation, Er is doped into the cladding not the core, so that the increase of the loss due to the OH bond generated from doped Er largely occurs in the cladding. Thus, compared to the case where Er is doped into the core, the overall optical loss is lowered. As shown in FIG. 4, an input light signal source and a pump laser diode are connected to the optical fiber through a WDM coupler, and a wavelength of the pump laser diode is fixed to an optical wavelength, i.e, 1.495 µm such that the C-band optical amplification and the L-band Raman optical amplification may be performed at the same time.

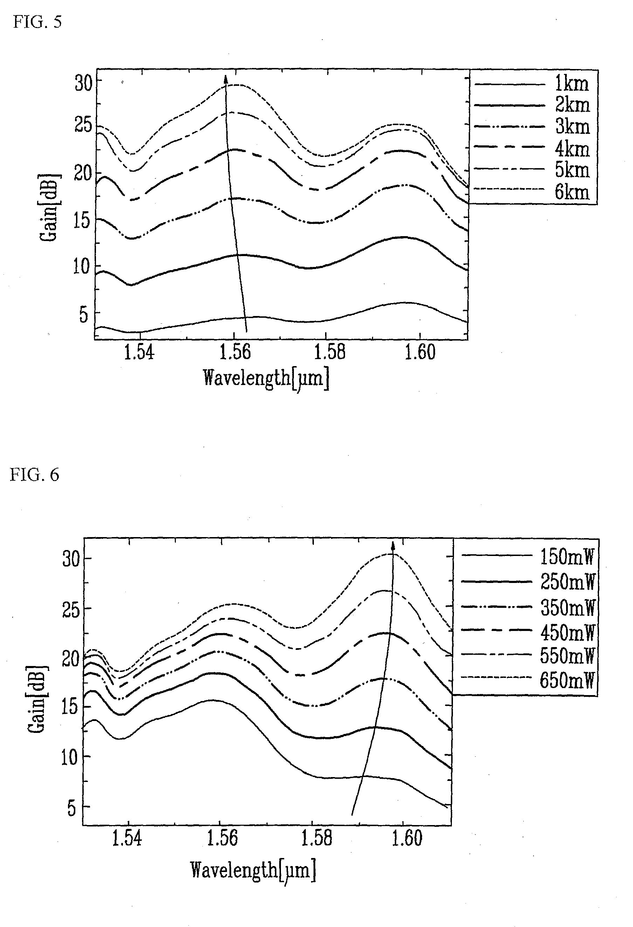

FIG. 5 is a graph showing an output over a wavelength axis when the uniform input optical signal of -25dBm is input into the simulation of the optical amplifier structure of FIG. 4. A range of the used pumping power is 450mW both for the forward direction and the reverse direction. With the concentration of Er of 3 x 10¹⁶ cm⁻³ and the concentration of Ge of 10 mol%, a change of a gain over a length of the optical fiber was calculated. As will be appreciated from this result, three peaks are shown at 1.53, 1.56, 1.60 µm. The first peak is a direct transition peak due to Er in the cladding, and the third peak is a gain peak due to Raman effect. In addition, the second peak is generated due to the optical signal amplified by Er and further increased by the Raman effect. When the optical fiber grows longer, the overall gain values are increased, and the 1.56 µm band corresponding to the second peak is gradually increased.

This is generated due to a gain transition of the Er ions inverted in small amounts as the pump energy is dissipated along the long optical fiber. Therefore, for the gain flattening, it is desirable that the second peak is matched to the first peak by adjusting the length of the optical fiber. In other words, since the second peak is also connected with the number of Er ions in the optical fiber (when there are many Er ions, the gain transition is generated in a short time interval), the optimal length of the optical fiber is adjusted according the concentration of Er in the optical fiber.

FIG. 6 is a graph showing a change of a gain over a pumping power of an optical fiber according to a preferred embodiment of the present invention. Here, the length of the optical fiber is fixed to 4.5 km, and the concentration of Er is 3 x 10¹⁶ cm⁻³ and the concentration of Ge is 10 mol%. As the pumping power increases, the third peak (1.60 µm) is gradually increased due to the increase of the Raman gain. In addition, with the increase of the pumping power, the second peak is slightly increased due to the Raman gain. Therefore, by adjusting the length of the optical fiber, the second peak may be controlled. In addition, the third peak may be matched to the first peak by adjusting the pumping power.

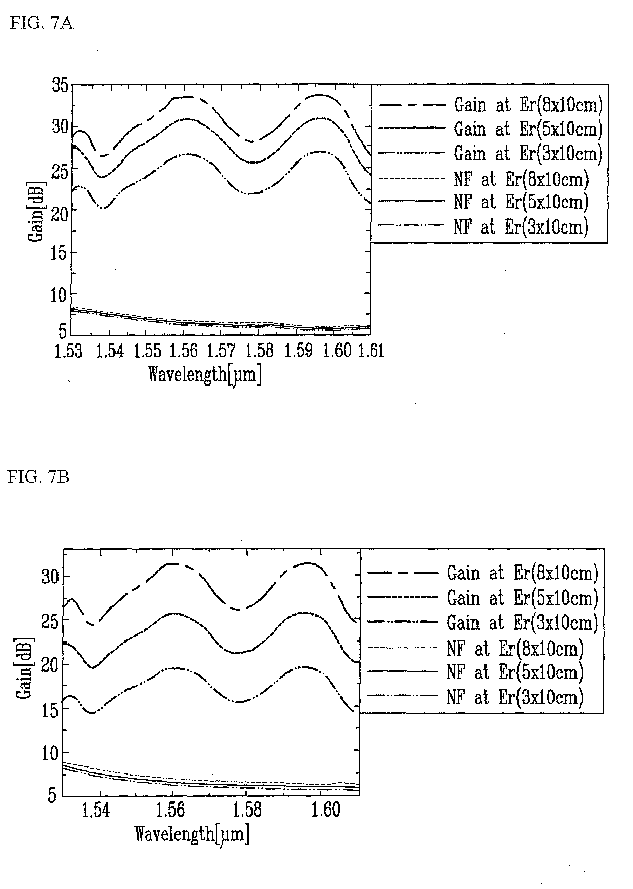

FIGS. 7A and 7B are graphs showing a gain level and a noise feature (NF) for an optimal length of the optical fiber and pump energy, over an Er concentration in cladding of the optical fiber amplifier of FIG. 5.

FIG. 7A shows a result of a function of the Er concentration when Er is doped into a cladding immediately adjacent to the core, 2.6 to 5.2 um apart from the center of the core. When the concentration of Er is 8X10¹⁶cm⁻³, the optimal length of the optical fiber and the pumping power in both directions are 2 km and 1.09 W, respectively, for the gain flattening. Under this circumstance, the average gain of 32 dB is obtained and the noise of 5.5 to 7.9 dB is shown. The pumping power not absorbed throughout the optical fiber is 250 mW. For the high-concentrated Er-doped optical fiber, the optical fiber having a short length should be used to match the second peak to the first peak, and accordingly, due to the shortage of the nonlinear Raman gain, the high-power pump is required for the gain flattening of the third peak.

When the concentration of Er is 3 X 10¹⁶cm⁻³, the optimal length of the optical fiber and the pumping power are 4.8 km and 510 mW and the average gain is 24 dB and the noise exists in the range of 6.0 to 8.5 dB. The pumping power which is not absorbed is 67 mW. For the low-concentrated Er-doped optical fiber, since the long optical fiber is used, the gain flattening may be achieved only with the small pumping power. Consequently, the high-concentrated Er-doped optical fiber has a high gain and a low noise characteristic but requires a very large pumping power, which is inefficient. In contrast, the low-concentrated Er-doped optical fiber uses a small pumping power so that, although long optical fiber is required, it is efficient to use. When the concentration of Ge is further adjusted, the length of the optical fiber may be efficiently reduced, and the pumping power may be reduced as well. Thus, more efficient amplifier may be constructed.

FIG. 7B shows a result of the simulation obtained from the conditions (pumping power and length of the optical fiber) to achieve an optimal gain flattening as the concentration of Er is changed, when Er is not doped into the cladding immediately adjacent to the core, but is doped into a region a bit apart from the core. However, the cross-sectional areas into which Er is doped in FIGS. 7A and 7B are the same.

In FIG. 7B, the Er-doped region is located at a region 2.8~ 5.3 um apart from the core center. The result with the change of the concentration of Er is shown. Generally, it will be appreciated that the gain is smaller and the noise is a bit larger compared to FIG. 7A. However, since the background loss of the optical fiber is set to be 1.0 dB/km for both FIGS. 7A and 7B, the simulation result may be different from the result obtained by the manufactured one (in fact, there is a difference between them). However, when Er and Ge are doped together into the core, the loss due to the OH lose in the core is significantly increased, however when Er is separately doped into the cladding, the optical loss in fabrication may be reduced.

The simulation results of the distributed type Er-Ge doped optical fiber and the optical amplifier using the same have been described. According to another embodiment of the present invention, even when Er is locally or collectively distributed at one portion by increasing the Er-doped concentration only at that portion, rather than weakly distributed all over the optical fiber as describe above, the similar result may be obtained.

For example, when the optical amplifier is configured such that the high-concentrated Er-doped optical fiber (e.g., 100 times higher than that described in the above embodiment) and the 10 to 20 mol% Ge optical fiber are connected to front parts, intermediate portions and the back parts of the optical fibers, the C-band and the L-band may be amplified at the same time using a pumping light source having one wavelength.

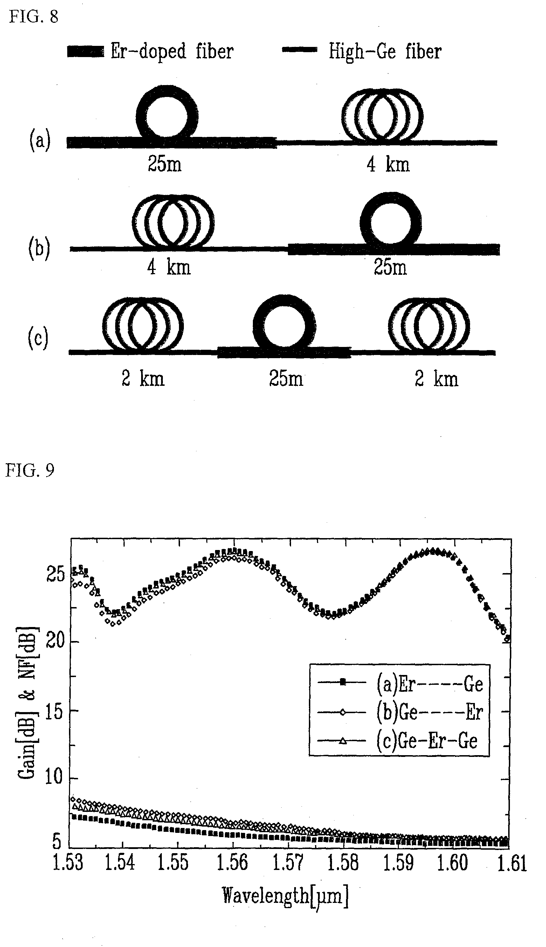

FIGS. 8A to 8C are schematic diagrams showing an optical fiber in which an Er-doped optical fiber and a high germanium doped optical fiber are connected in series so that C-band amplification and L-band amplification may be performed using a pump source having one wavelength. In FIG. 8A, the 25m-long Er-doped optical fiber is arranged at the front part of the optical amplifier, and the 4 km-long high Ge doped optical fiber is connected in series at the back part. In FIG. 8B, the 4 km-long high Ge doped optical fiber is arranged in the front part, and the 25m-long Er-doped optical fiber is connected in series at the back part. In FIG. 8C, the 25m-long Er-doped optical fiber is arranged between the 4 km-long high Ge doped optical fibers. When a combination of these optical fibers is arranged with the optical fiber indicated by reference numeral 110 in the optical amplifier of FIG. 4, for example, the C-band and L-band may be amplified at the same time.

FIG. 9 is a graph sowing a gain and noise index (noise) obtained from each simulation of three optical fibers of FIGS. 8A to 8C. In terms of the light gain, the optical fibers shown in FIG. 8A and FIG. 8C are almost the same, but the C-band gain of FIG. 8B is a bit smaller. In terms of the noise, the optical fiber of FIG. 8A is best, and that of FIG. 8B is worst. The optical fiber of FIG. 8C is in the middle between those of FIGS. 8A and 8B.

As described above, according to the present invention, an optical fiber in which optical amplification due to the rare-earth element and optical amplification due to the nonlinear Raman effect may be generated at the same time may be provided, and optical amplifier having a wideband of gain may be implemented.

In addition, by doping the rare-earth element not into the core but into the adjacent cladding, the background loss of the core may be reduced so that the Raman gain is further improved.

In addition, compared to the conventional commercially available Er-doped optical amplifier, the C-band and the L-band may be amplified at the same time with a simpler structure. Further, compared to a high-power multiple wavelength pump laser used to amplify the C-band and the L-band at the same time in the conventional Raman optical amplifier, the manufacturing costs are competitive.

In addition, when the conventional commercially available Er-doped optical fiber and high Ge doped optical fiber are connected to each other and pumped with one wavelength, an optical amplifier capable of amplifying the C-band and the L-band at the same time may be arranged and easily commercialized.

Although the specific embodiments of the present invention have been described in detail, the present invention is not limited thereto, but it will be apparent to those skilled in the art that a variety of modifications and changes may be made within the subject matter of the present invention.

## Claims

1. An optical fiber comprising:
a cladding doped with a first element, the first element being a rare-earth element; and
a core having a second element to induce a nonlinear Raman phenomenon,
wherein a pump light propagating through the core is amplified into a first band by the first element of the cladding and Raman-amplified into a second band by the second element.

2. The optical fiber according to claim 1, wherein the first band and the second band are the same.

3. The optical fiber according to claim 1, wherein the first band and the second band are different from each other.

4. The optical fiber according to claim 1, wherein the first element is doped into at least a region adjacent to the core.

5. The optical fiber according to claim 1, wherein a composition includes any one of silica, tellurite, fluoride, sulfide-based, and selenide-based.

6. The optical fiber according to claim 1:
wherein the first element is any one of erbium (Er), ytterbium (Yb), praseodymium (Pr), neodynium (Nd), holmium (Ho), thulium (TM), and dysprosium (Dy); and
wherein the second element is any one of silicon (Si), germanium (Ge), phosphorus (P), sulfur (S), tellurium (Te), and selenium (Se), constituting a glass.

7. The optical fiber according to claim 1:
wherein, when the optical fiber is made of silica, a pump wavelength is a single wavelength in a range of 1480 to 1500 nm; and
wherein optical amplification using Er corresponds to C-band amplification in 1530 to 1570 nm, and nonlinear Raman amplification using Ge corresponds to L-band amplification in 1570 to 1610 nm.

8. The optical fiber according to claim 7, wherein the Er is doped into the cladding at a concentration of 10¹⁵ cm⁻³ ~ 10¹⁷ cm⁻³, and the Ge is doped into the core at a concentration of 10 ~30 mol % so that a difference of refractive indexes between the core and the cladding is 0.015 to 0.03.

9. The optical fiber according to claim 1, wherein a length is 1 to 10 km.

10. The optical fiber according to claim 1:
wherein, when the optical fiber is made of tellurite, a pump wavelength is a single wavelength in a range of 1470 to 1500 nm; and
wherein optical amplification using Er corresponds to L-band amplification in 1570 to 1610 nm, and nonlinear Raman amplification using tellurite corresponds to U-band amplification in 1610 to 1700 nm.

11. An optical fiber amplifier comprising:
an optical fiber according to a optical fiber for receiving an optical signal from an input stage, amplifying the optical signal, and transferring the optical signal to an output stage, wherein the optical fiber comprises: a cladding doped with a first element, the first element being a rare-earth element; and a core having a second element to induce a nonlinear Raman phenomenon, wherein a pump light propagating through the core is amplified into a first band by the first element of the cladding and Raman-amplified into a second band by the second element;
at least one light source for outputting a pump light to the optical fiber; and
at least one coupler for coupling the optical signal and the pump light output from the light source.

12. The optical fiber amplifier according to claim 11, wherein one light source and one coupler are provided to the input stage and the output stage, respectively.

13. The optical fiber amplifier according to claim 12, further comprising:
a first isolator arranged at a front part of the coupler of the input stage for passing an optical signal input from the input stage while blocking light input from the opposite direction; and
a second isolator arranged at a back part of the coupler of the output stage for passing an output optical signal while blocking light input from the opposite direction.

14. An optical fiber comprising:
at least one optical fiber doped with a first element, wherein the first element is a rare-earth element; and
at least one optical fiber doped with a second element to induce nonlinear Raman amplification,
wherein the optical fiber doped with the first element and the optical fiber doped with the second element are connected in series, and
wherein a pump light having a predetermined wavelength propagating through the core is amplified into a first band by the first element, and Raman-amplified into a second band by the second element.

15. The optical fiber according to claim 14:
wherein the optical fiber doped with the first element is an Er-doped silica optical fiber;
wherein the optical fiber doped with the second element is a Ge-doped silica optical fiber, the Ge being doped at a concentration of 10 to 30 mol %; and
wherein the pump light is amplified into a C-band by Er, and Raman-amplified into an L band by Ge.

16. An optical fiber amplifier comprising:
an optical fiber according to a optical fiber for receiving an optical signal from an input stage, amplifying the optical signal, and transferring the optical signal to an output stage, wherein the optical fiber comprises: a cladding doped with a first element, the first element being a rare-earth element; and a core having a second element to induce a nonlinear Raman phenomenon, wherein a pump light propagating through the core is amplified into a first band by the first element of the cladding and Raman-amplified into a second band by the second element;
at least one light source for outputting a pump light to the optical fiber; and
at least one coupler for coupling the optical signal and the pump light output from the light source.

17. The optical fiber amplifier according to claim 16, wherein one light source and one coupler are provided to the input stage and the output stage, respectively.

18. The optical fiber amplifier according to claim 17, further comprising:
a first isolator arranged at a front part of the coupler of the input stage for passing an optical signal input from the input stage while blocking light input from the opposite direction; and
a second isolator arranged at a back part of the coupler of the output stage for passing an output optical signal while blocking light input from the opposite direction.
